# EUROPEAN PATENT SPECIFICATION

(11) **EP 2 912 807 B1**
(45) Date of publication and mention of the grant of the patent: **25.08.2021**
(21) Application number: 13849187.3
(22) Date of filing: 24.10.2013
(51) Int. Cl.: H04L 12/28, G08C 17/02, G08B 1/08

(54) **A DEVICE CONTROL NODE, AN INTERFACE NODE AND A HYBRID CONTROL SYSTEM**
VORRICHTUNGSSTEUERKNOTEN, SCHNITTSTELLENKNOTEN UND HYBRIDES STEUERUNGSSYSTEM
NOEUD DE COMMANDE DE DISPOSITIF, NOEUD D'INTERFACE ET SYSTÈME DE COMMANDE HYBRIDE

(30) Priority: 24.10.2012 US 201261717680 P
(43) Date of publication of application: 02.09.2015
(73) Proprietor: OR Technologies Pty Ltd, Melbourne Airport VIC 3045 (AU)
(72) Inventor: BISHOP, Daniel, John, St Kilda, Victoria 3182 (AU); DUFFIELD, Christopher, Robert, Richmond, Victoria 3121 (AU)
(74) Representative: Gill Jennings & Every LLP
(86) International application number: PCT/AU2013/001238
(87) International publication number: WO 2014/063201

(56) References cited:
- US-A1- 2006 063 523
- US-A1- 2006 267 566
- US-A1- 2009 065 596
- US-A1- 2011 070 904
- None

## Description

### TECHNICAL FIELD

The present invention relates to a hybrid control system and a hybrid control method.

### BACKGROUND

Devices and building services systems are typically installed to serve the building occupants. These devices and systems can benefit from controlling their operation automatically, based on knowledge of the presence of humans *(i.e.,* occupancy) in their vicinity, including the density of occupancy and its time dependence. State of the art energy efficient lighting systems typically utilise occupancy sensors to allow a common or centralised control system to moderate or control their operation. A particular challenge for these systems is the requirement of creating and maintaining a virtual map of the sensors and the devices and systems, and transposing the map from one network to another. Addressability is the concept at the core of most distributed engineering systems. Quite simply, it enables the centralised control system to discriminate a device from other devices on a network, typically for control and/or interrogation purposes. Addressability can be achieved in several ways, at various levels of abstraction, including the following:
(i) it can be hardwired by referring to a particular wire (e.g., a light switch connected to a particular light fitting, or a motion sensor with an integrated switch controlling a bank of four lights);
(ii) it can be hardwired using a two wire interface to a device to deliver status - a common way for a smoke detector to deliver an alarm message by closing a switch which a central processing unit senses;
(iii) it can be similar to an IP address on a computer; or
(iv) it can be set by a DIP switch, and be on a daisy chained network.

Generally speaking, the more sophisticated systems require communications protocols, and a common or centralised microprocessor-based control system that needs to be programmed with specific details of each of the devices on the network, including, *inter alia:*
(i) the physical location of the device, generally mapped out on building plans, or at least the special relationships between different devices on the network, for instance the light fittings that should be switched based on the output of a particular sensor;
(ii) the make and model of the device;
(iii) the communications protocol used to communicate with the device;
(iv) the firmware version of the device; and
(v) the command set of the device.

A good example of an addressable system is a commercial air conditioning system. This would typically consist of large centralised items of equipment, including a chiller to provide chilled water, a boiler to provide hot water, a system of pumps, valves, and a piping system to deliver the water to distributed fan coil units that each have a fan (and that has its own centrally controlled system of fans, dampers, ducts etc.). There are typically several or even dozens of fan coil units per floor, and a thermostat for each fan coil unit. A building management system (BMS) collects information from each of a multitude of sensors throughout the system, and controls each of the devices according to the demand of the system to provide the required amount of hot or cold water and air flow to each of the terminal units. Each of the devices has an address on the system - the system needs to know which fan coil unit has to respond to which thermostat reading, and which valve to control to deliver the required amount of the hot or chilled water to that unit. Then the chiller and boiler have to respond to the combined demand of the building, and they need different control signals from the pumps, and so on.

Clearly, such a system requires significant infrastructure around the communications and control processes, and indeed such a system demands addressability - the chiller simply needs to know if a message is meant for it rather than the boiler. Similarly, fire systems need to discriminate between different smoke detectors within a building - they simply have to know how each device relates to each other.

Hence these systems require a detailed map of the devices on the network, which needs to be programmed into the system - no easy task, particularly with protocol conversions between different types of devices, and many other complexities. Accordingly, such systems are complex and expensive to specify, design, install, configure, and maintain.

It is desired to provide a device or system, an interface node, a hybrid control system, or a device control node, that alleviates one or more difficulties of the prior art, or to at least provide a useful alternative.

US 2006/063523 A1 discloses background information.

US 2009/065596 A1 discloses background information.

US 2011/070904 A1 discloses background information.

### SUMMARY

According to a first aspect of the invention, there is provided a hybrid control system as set out in claim 1.

According to a second aspect of the invention, there is provided a hybrid control method as set out in claim 14.

### BRIEF DESCRIPTION OF THE DRAWINGS

Some embodiments of the present invention are hereinafter described, by way of example only, with reference to the accompanying drawings, wherein:
Figure 1 is a schematic diagram showing one dimension of a two-dimensional array of sensor nodes with occupancy sensors and the relaying of message therebetween;
Figure 2 is a schematic diagram showing one dimension of a two-dimensional array of sensor nodes with CO₂ sensors and the relaying of message therebetween to control the air conditioning based on air quality;
Figure 3 is a schematic diagram illustrating the use of a 'kill switch' function to switch off all devices coupled to a wireless peer-to-peer network by device control nodes of the network;
Figure 4 is a schematic diagram illustrating the use of a wall switch to selectively switch off all devices of a corresponding type that are coupled to the wireless peer-to-peer network by device control nodes; and
Figures 5 and 6 are a schematic diagram and a flow diagram, respectively, illustrating the automatic generation of unique identifiers and locations of respective sensor nodes, allowing locations to be associated with sensor data.

### DETAILED DESCRIPTION

International Patent Application No. PCT/AU2011/000459, entitled *Illumination Apparatus Methods and Systems* (hereinafter referred to as "the p2p patent application"), describes a lighting system and architecture in which sensor nodes communicate with each other using peer-to-peer multi-hop wireless networking. Each sensor node (which is typically situated within or adjacent to its controlled light source) includes a wireless transmitter for transmitting wireless signals to other sensor nodes, a wireless receiver for receiving wireless signals from other sensor nodes, at least one sensing component configured to sense at least one characteristic of a corresponding sensing region and to generate a corresponding output, and an intelligent controller for controlling at least one corresponding light source.

The controller of each sensor node is configured to control its corresponding light source(s) based on: (i) the output of the sensing component, or (ii) wireless signals received from one or more other sensor nodes, or (iii) data stored in memory within or associated with the controller, or (iv) any combination of (i), (ii) and (iii). The controller is also configured to cause the node's wireless transmitter to transmit wireless signals for use by other sensor nodes to control their own light sources.

This system of peer-to-peer nodes provides many advantages over prior art lighting systems, some of which are described in the p2p patent application.

The sensor nodes of the lighting system can be regarded as a platform, since the node controllers can be configured and re-configured to change the behaviour of the sensor nodes as desired, either as part of the manufacturing process, during installation, or in the field, or indeed at any time after installation. This ability to reconfigure the nodes as desired allows the system as a whole to provide enhanced functionality and to support new configurations and applications as the need arises. In particular, the sensor node controllers can be programmed not only to modify the processes or algorithms that each node uses to control its own light source(s), but also how the nodes exchange data with one another and what data is exchanged, whether related to lighting or otherwise. Processes for configuring the sensor nodes are described in Australian Patent Application No. 2012903471 ("the p2p configuration patent application").

Each sensor node can be attached to or mounted within a light fitting or luminaire, either as part of the manufacturing process or during installation, or alternatively can be retro-fitted to an existing light fitting or luminaire.

In the described embodiments, each sensor node includes at least one sensing component configured to generate an output indicative of human presence or absence in a corresponding sensing region. The output is thus indicative of (human) occupancy of that sensing region, and for convenience of description such a sensing component is also referred to herein as an 'occupancy sensor' (which, as described in the p2p patent application, may or may not be or include a motion detector). The sensor nodes are typically (but not necessarily) installed in or on the ceiling of an office or other installation type, with their occupancy sensors, wireless transmitters and wireless receivers generally directed downwards towards the floor, and portions of the wireless signals transmitted generally downwards from the sensor nodes (in the form of a generally conical, divergent beam) are then reflected or scattered back towards the ceiling for detection by the wireless receivers of other nearby sensor nodes. In the described embodiments, the wireless signals are short range *(e.g.,* infrared optical) signals that are received only by the few nearest nodes, and in some embodiments only the very nearest nodes such that each node only receives wireless signals from its immediate neighbouring nodes and not from nodes that are two or more nodes away. This latter configuration is assumed in the following description.

As will be appreciated by those skilled in the art, when such an arrangement is described in terms of a node only "receiving" signals from its immediate neighbouring nodes, it should be understood that this arrangement may include arrangements where signals from other nodes at larger separations are literally "received" by the wireless receiver, but are discriminated and not processed further in a substantive manner by the receiving node. For example, the node's wireless receiver may be configured to ignore signals whose intensity is below a threshold intensity, and/or the controller may be configured to drop or ignore signals or corresponding data received from such nodes based on intensity (where available to the controller) or one or more other criteria that can be used to assess whether the signal was or was not received from an immediate neighbouring node, as described below.

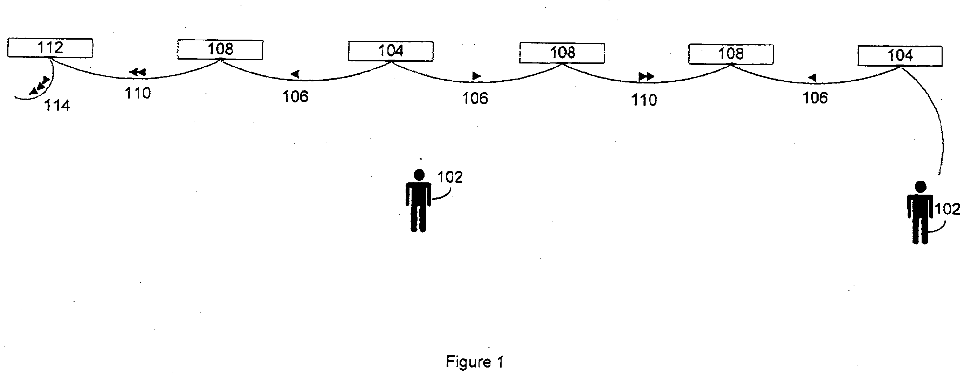

As shown schematically in Figure 1, upon detecting an occupant 102, a ('first') sensor node 104 transmits wireless signals (referred to herein as 'level 1' messages 106) to its immediately neighbouring or adjacent sensor nodes (referred to for convenience of description as 'second' sensor nodes) 108 to inform those second nodes 108 that one of their immediate neighbour sensor nodes has detected occupancy in its corresponding sensing region. In response, each of the second sensor nodes 108 then transmits a further message (referred to herein as 'level 2' message 110) to its own immediate neighbour sensor nodes (referred to for convenience of description as 'third' sensor nodes 112, but which will actually also include some of the second sensor nodes and also the first sensor node) to inform each of those third sensor nodes 112 that one of its second neighbours has detected occupancy. Each of these third sensor nodes 112 then transmits further wireless signals (representing 'level 3' messages 114) to its own immediate neighbour ('fourth') sensor nodes to inform them that one of their third neighbours has detected occupancy, and so on.

Although technically each sensor node transmits a different message to the one it received, it will be apparent that this process can be conveniently described as a message relaying or forwarding process, but where each message includes occupancy data that can be used by each node to determine or estimate its spatial separation from the node that detected the occupancy. In the described embodiments, this occupancy data includes a hop count or similar value representing the number of peer-to-peer communication hops, or equivalently the number of times that the message has been relayed or forwarded from peer to peer. However, it will be apparent to those skilled in the art that the occupancy data could take other forms, including spatial location data determined by GPS sensors and/or triangulation and the like, for example. This effective relaying and incrementing/updating of occupancy information can continue indefinitely until all sensor nodes have been informed of the occupancy, or each node can be programmed not to relay such messages when a predefined maximum hop count (or distance) is reached.

The result of this arrangement is that any given location within the installation space or environment of the sensor nodes will generally include (assuming occupants are present) short range wireless signals representing the occupancy of that location (if occupied) and the occupancy of other locations (if occupied). Moreover, the wireless signals in a given location representing occupancy in one or more other locations also include information indicative of the respective distances from the given location to those one or more other locations. In the described embodiments, this information takes the form of a hop count representing the number of wireless communication hops from the sensor node that detected the occupancy. However, as indicated above, it will be apparent to those skilled in the art that other metrics could be used in other embodiments.

It will be apparent from the above description that each sensor node will receive multiple occupancy messages purporting to represent occupancy detection at different hop counts or effective distances from that node, whether those messages represent different occupancies, or indeed the same occupancy. (For example, a node having transmitted an occupancy message to an immediate neighbour node will then receive effectively the same occupancy message back from that neighbour node, but with an incremented hop count).

Typically, a sensor node receiving occupancy information representing multiple occupancies at different distances or hop counts will discard or ignore those messages with hop counts greater than the lowest hop count value in the received messages (or equivalently with distances great than the smallest distance), although this depends upon how the node's controller is configured. Alternatively, each newly generated occupancy message can include a nominally unique identifier (e.g., a random number) that is included in the relayed messages, so that messages representing the same occupancy event can be ignored if an occupancy message representing that same occupancy event has been previously received. Similarly, a sensor node detecting occupancy will typically be configured to ignore received occupancy messages. Typically (but not necessarily), any closer occupancy detection overrides occupancy at more remote locations.

In some examplary embodiments, a sensor node can be configured to retain and relay information relating to occupancy at other sensor nodes that are not necessarily the closest. For example, a sensor node may have recently received a message representing occupancy only one hop count away. Immediately following receipt, it then receives a message representing occupancy three hops away. The receiving sensor node can be configured to store and relay this occupancy information so that it can be used to create a more detailed picture of the occupancy within a space. This means that rather than each sensor node simply knowing how close the closest occupant to it is, it could understand the occupancy throughout the entire space.

When configured in this manner, the occupancy information available (in the form of wireless signals) at a given location *(i.e.,* sensor node) represents real-time information about how close an occupant is to that location, and/or an occupancy profile of how recently occupancy was detected at a separation of at least one given distance or number of hops away from that location/node. What this means is that a sensor node receiving occupancy messages effectively knows how close someone is to it at any given time (in terms of integer-valued quantised separations *(i.e.,* number of nodes), or alternatively within the resolution of the spacing distances between sensor nodes if assessed as (continuous) distance).

A system or array of sensor nodes requires only multiple instances of one identical device, the sensor node, as many as required to provide coverage over the desired area. The sensor nodes can be identical and do not require unique addresses, although, as described in Australian Patent Application No. 2012903471, the sensor nodes can be configured with respective addresses, and even to self-generate unique addresses if desired. Once installed, each sensor node communicates with its one or more neighbouring sensor nodes to effectively form an *ad hoc* peer-to-peer wireless network. The system architecture is perfectly scalable, simplifying manufacturing, and in general obviating any need for site-specific design or programming, and unlike prior art systems there is no requirement for external infrastructure to bind the system together. A typical installation includes one or more rectangular arrays of sensor nodes mounted with or within light fittings, which may be existing light fittings, such as are found in most offices. However, in some embodiments the sensor nodes can form their own array completely independent of the array of light finings. Additionally, in some installations a relatively small number of sensor nodes that do not have associated light sources can be useful to bridge gaps in the lighting grid by interconnecting (by way of the wireless signals) otherwise isolated lights and/or lighting zones.

Typically, each sensor node is mounted within the housing of a corresponding luminaire or other form of light fitting, with the sensor node configured to control the lights in the luminaire/fitting according to occupancy information available to it from its own occupancy sensor(s) and occupancy messages received from neighbouring sensor nodes, and, in the case of sensor nodes including light sensors, information on the ambient light levels, both to provide daylight dimming and to monitor the light output from the luminaires. In comparison with existing centralised lighting control systems, the lights simply respond in a pre-configured way (although this behaviour can be modified if desired, as described in the p2p configuration patent application, for example), depending on how close someone is to the light fitting.

For example, in one typical sensor node configuration, when a sensor node senses someone beneath it (or, more accurately, in its sensing region), it applies 100% of the available illumination power (although this can be modified or 'trimmed' by a single press of a remote control), the immediately adjacent lights around the occupant are set to 50% illumination intensity, and then beyond them the other lights on the whole floor are set to 20% illumination intensity. In this manner, a region of relatively high illumination follows each occupant as they change locations, thereby reducing power consumption by reducing the illumination in unoccupied areas while maintaining a region of relatively high illumination around each occupant. Further to this, each sensor node can be selectively configured to operate in accordance with a selected one of a plurality of pre-defined or user-defined 'moods' that determine how it operates. For example, an open office light might behave as described above, whereas all of the lights along a corridor or a driveway through a car park might be configured to light up in front of an occupant on entry. Similarly, the nodes/lights located along a path to an emergency exit can be configured to remain at 100% illumination intensity whenever there is at least one occupant on that floor. This can all be configured by sending the corresponding configuration commands/data to the sensor nodes, using a wireless remote control for example, as described in the p2p configuration patent application.

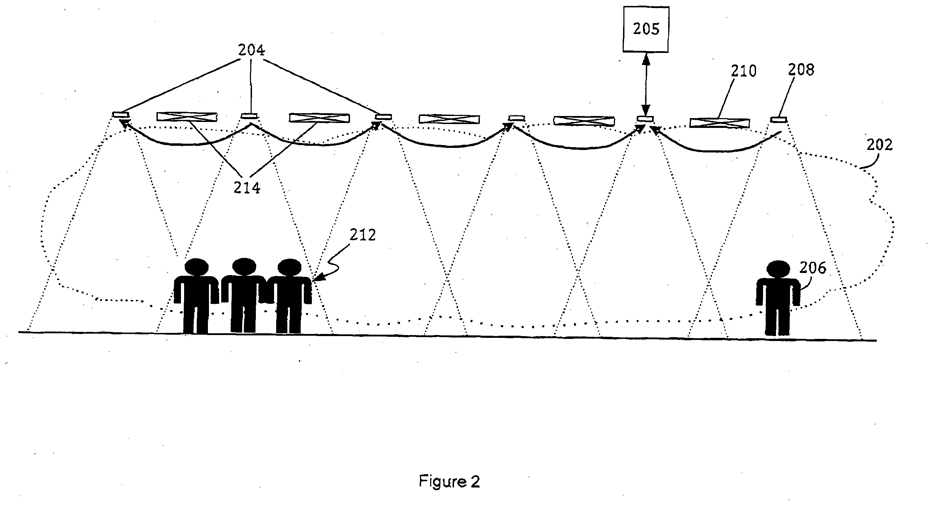

The wireless signals representing occupancy information as described above can be considered to constitute an 'occupancy information cloud' 202, as shown in Figure 2, that can be received by any device or system having a corresponding type of wireless receiver, and used as desired by that device or system to control its own operation. That is, the occupancy information (representing occupancy detection and distance) used by the sensor nodes of the lighting system to control their respective light sources can also be used by other systems and/or devices to inform their own decision making about how to operate, including commonly or centrally controlled addressable devices and systems (where "addressable" in this context refers to components having a hard-wired connection to the common control system or a network address on a wired or wireless network that is neither *ad hoc* nor peer-to-peer and are controlled by a common control system. These other devices and systems can be controlled using the sensor nodes of the lighting system and/or further sensor nodes of the same type as described above, and/or other types of nodes or control devices having wireless receivers configured to receive the wireless signals from the sensor nodes (and/or other nodes/devices) and to output control signals and/or power on the basis of the received wireless signals, either alone or in combination with other information/data. Additionally, the *ad hoc* network formed by the sensor nodes can be used to forward messages to and/or from other devices having wireless interfaces, and the *ad hoc* wireless network can be one network of a larger network of networks.

In particular, the controller of a sensor node as described above and in the p2p patent application and/or the p2p configuration patent application can be used to control a device other than a light source. Such sensor nodes can be provided in addition to the ceiling mounted sensor nodes, and thus need not be located on the ceiling. Moreover, for some applications there may be no need for the sensor, or no need for the transmitter, or no need for either of these components. Thus in some embodiments a receiver node requires only the wireless receiver and the controller, the controller being configurable to control a corresponding device based on the wireless signals received from one or more of the sensor nodes.

As with the control of lighting, the ability to control other types of devices and/or systems based on occupancy can be used to reduce power consumption by turning off those devices and/or systems, or by placing them in a low-power state - for example, when the area around these devices has been vacated for a predetermined period of time. This form of control can be implemented as a stand-alone device connected to and/or providing power to the consumer device, or can be a component integrated within a consumer device.

For example, a plasma television with such a control device can be configured to switch itself off or into a low power state whenever someone is further than 15m away for ten minutes or more, and to turn back on again only when manually switched back on (e.g., by the television's remote-control), or automatically when someone is within, say, 5m. This form of device requires only a wireless *(e.g.,* infrared) receiver and a controller; i.e., there is no need for a wireless transmitter. Some devices (including televisions) already include suitable hardware components *(e.g.,* a wireless receiver and microprocessor control components), and only need to be configured as described herein. In any case, as with the sensor nodes, such a device can be configured as desired to respond to the occupancy information it receives.

Many types of devices could benefit from this form of control including, for example:
(i) soldering irons, and other industrial equipment;
(ii) general consumer equipment: irons, sandwich makers, etc.
(iii) televisions, computer monitors;
(iv) ceiling fans, stand alone air conditioners, heaters; and
(v) photocopiers.

As noted above, such a node or control device can be either integrated into any of the above, and/or can be configured to provide control signals and/or to control the supply of power to the device. For example, a node/control device as described above can be integrated as part of a power socket, power board, or other form of power interface that selectively provides mains power to one or more devices connected to it, whereby the integrated device selectively switches on or off mains power to any devices connected to it, depending on received occupancy information. In another form, the node/control device is part of an IR blaster device that is configured to send IR remote control signals to nearby devices in order to control those devices based on occupancy. In another form, the node/control device is configured to send at least one other form of wireless signals, such as WiFi, Zigbee, Bluetooth and the like, to nearby devices in order to control those devices based on occupancy.

The forms of node or control device described above are referred to herein as 'passive' nodes or control devices in that they simply receive wireless signals representing occupancy messages and do not transmit their own signals or messages to other nodes. In contrast to these passive nodes/control devices, other forms of node/control device include a wireless transmitter to transmit messages to other nodes.

### Air conditioning systems

Air conditioning systems are typically configured as multiple independently controlled zones on the order of 10-200m² in area. Prior art systems have used motion sensors to save energy by not conditioning unoccupied areas. This has, however, previously required dedicated motion sensors for the air conditioning system, transposing the maps of the physical locations and the addresses of the motion sensors from a different system (for example an addressable lighting system to the air conditioning thermostats and/or terminal units. Also, due to the expense of addressable motion sensors, and the incremental cost of the infrastructure, there are typically relatively few motion sensors in a conventional system, and the layout is often less grid-like, making this mapping process time consuming, prone to errors, and likely to require re-programming if the office layout changes.

These problems and complexities are overcome by providing thermostats or terminal units that use the occupancy information transmitted by the sensor nodes. As with the nodes/control devices described above, each of the thermostats or terminal units includes a wireless receiver and a controller/microprocossor, and is configured with information on the size of its corresponding air conditioning zone. They are programmed to make their own decisions on how to respond to received occupancy information (and the absence thereof), typically by either switching off the corresponding air conditioning ducts or units after a pre-configured period of vacancy, or alternatively retreating to a heating or cooling setback temperature.

In addition to their use of peer-to-peer wireless communications, the nodes can also be provided with an addressable interface to allow them to send and/or receive commands and/or data to and/or from addressable systems such as those described above.

### Common or Centrally Controlled Lighting Control Systems.

Existing commonly or centrally controlled lighting control systems provide a large range of functionality, but for at least the reasons described above, the uptake of these systems has been limited to the absolute top end of the market due to the associated cost and complexity which cannot be justified in the broader market for lighting. Existing commonly or centrally controlled lighting control systems have at least each sensor, light fitting, and control panel on an addressable network (along with a large range of "behind the scenes" equipment) which together constitute an expensive and complex system.

An addressable interface node allows a network of sensor nodes as described herein to interface with an addressable system such as an addressable lighting system. The addressable interface node includes not only a wireless receiver (and typically, but not necessarily, a wireless transmitter) constituting a communications interface to the wireless *ad hoc* network, but also an addressable (second) interface compatible with the addressable network of the commonly or centrally controlled system. Depending on requirements, only one addressable interface node might be required per floor. The addressable interface node thus integrates the addressable centrally controlled system and the distributed peer-to-peer sensor node network(s) to form a hybrid central control/distributed control system that abstracts a large amount of the complexity to the *ad hoc* wireless network that in general requires no site specific design, programming, commissioning or maintenance. Some other examples of such hybrid control systems are described below.

Commonly or centrally controlled addressable systems often also collect diagnostic information (e.g., from the ballast in a lighting system) such as, for example, lamp burning hours, failed lamps, ballast life, etc. This information can easily be collected from the ballast and either communicated to the user/maintainer directly by the sensor node (for example via a visual indicator, either automatically, or in response to an interrogation command), or communicated across the wireless peer-to-peer network to a centrally controlled system that then raises the appropriate alarms/messages.

### Mapping Occupancy and other Information

Currently within the office marketplace there is a drive towards more efficient use of office space. One example of this is the growing desire to implement "hot desking", whereby multiple workers use a single physical workstation or work surface during different time periods. Hot desking is particularly useful for specific types of office workers that have sporadic use of the office, for example sales teams.

However, planning and optimising hot desking requirements is complex, and relies on collecting occupancy data. The real time occupancy information provided by the sensor nodes described herein can be collected and logged by a system (for example a BMS, addressable lighting control system, or other dedicated system).

Running a hot desking office organisation system efficiently also requires access to real-time occupancy data, so that people can be directed to vacant areas in an office, which may entail the use of the conference rooms, breakout areas etc. This can be a complex process particularly taking into consideration the requirement for certain teams to co-exist within a specific area. The system or component that collects the data for logging and maintenance of the system receives and processes the wireless signals transmitted by the sensor nodes to gain access to the occupancy information without having to install dedicated occupancy sensors or systems.

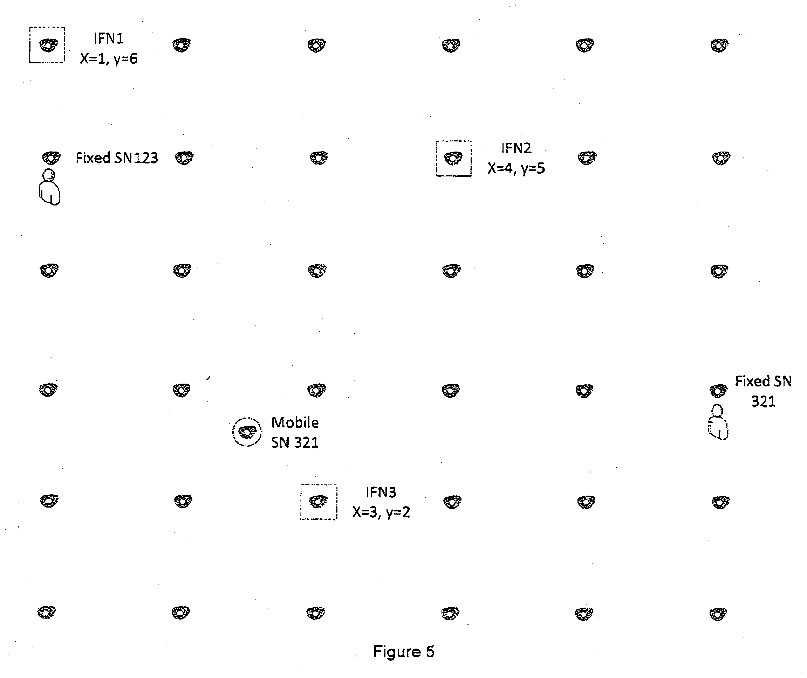

In one example, at least three addressable interface nodes are installed at known mutually spaced locations in office space on a floor of an office building, as shown schematically in Figure 5. The known 'locations' of the nodes may be absolute or relative, and may be determined either manually by measuring their absolute locations or their relative spatial separations, or automatically by GPS and/or triangulation, to each other and/or to wireless network transceivers in communication with the sensor nodes. In addition to the at least three addressable interface nodes, the office space also includes mutually spaced sensor nodes, each having a corresponding wireless transmitter and receiver (typically, in the form of a wireless transceiver component).

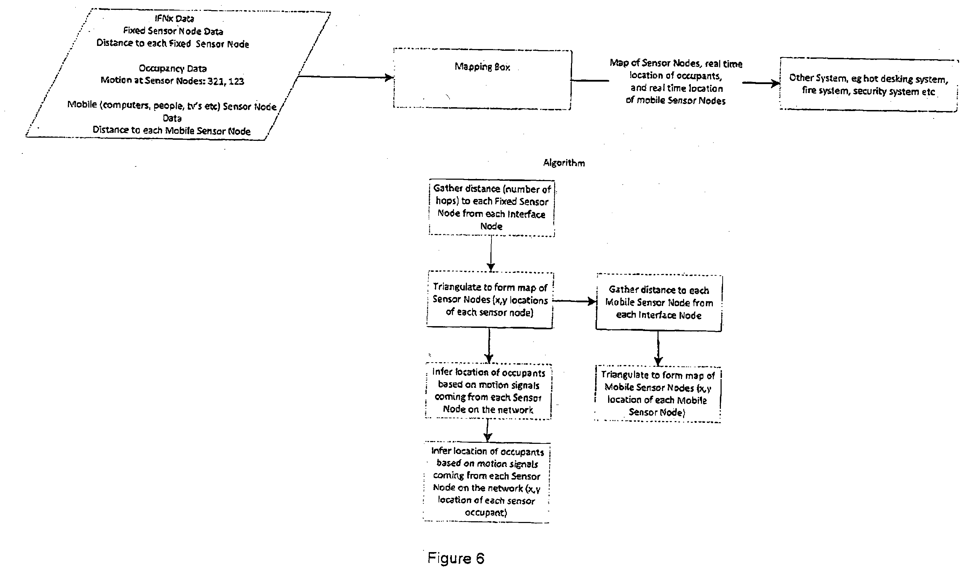

As shown in the flow diagram of Figure 6, following installation, a command is issued to the sensor nodes (as generally described in the p2p configuration patent application) to cause each sensor node to generate a corresponding nominally unique identifier, and to then generate a message containing that identifier of the node, and to send that message via its wireless transmitter to neighbouring sensor nodes. Nodes receiving these messages are (possibly temporarily) configured to forward these received messages in turn to their own neighbouring nodes (even when the hop count is larger than a similar message received at essentially the same time, *i.e.,* messages that are usually dropped under these circumstances), as generally described in the p2p patent application and the p2p configuration patent application, incrementing a hop count (or equivalent) also contained in each message. Eventually, these forwarded or relayed messages are received by the at least three addressable interface nodes whose locations are known. These addressable interface nodes are coupled to a common processor of the common control system, via the addressable network. Each of the addressable interface nodes forwards the received message payloads (*i.e*., the received node identifets and their respective hop counts) to the common processor, which processes that information, together with the known locations of the addressable interface nodes, to determine approximate locations of the sensor nodes.

In this manner, the common control system determines the spatial locations of the sensor nodes in the office space, and can generate a physical map showing the locations of those nodes. This information and map is then used in conjunction with occupancy information generated at subsequent times to determine which locations in the office space arc occupied and which are unoccupied.

Similarly, the method can be used on demand or periodically to determine the spatial locations of nodes (and their associated items, typically devices or systems in the case of a sensor node) whose locations are not fixed. This can be used, for example, to determine the real-time location of items such as products being manufactured or assembled, mobile robots, inventory, personnel, etc.)

### Security/Alarm Systems

In addition to power saving applications, the sensor nodes can be used for other purposes. For example, the occupancy information generated by the sensor nodes can be used to provide office or building security. In some embodiments, a hybrid security system combines the autonomous (or at least quasi-autonomous) wireless peer-to-peer sensor nodes described herein with commonly or centrally controlled addressable security components. The hybrid security system thus has access to the occupancy information, which means it does not need additional motion sensors. The sensor nodes can be armed or placed in a security mode by a transmitter of an addressable interface node transmitting an instruction to nearby sensor nodes to enter the security mode, with each sensor node relaying the message to other nearby sensor nodes until every sensor node in the corresponding peer-to-peer network *(e.g.,* office or floor) is in the security mode, as described in the p2p configuration patent application. Once in the security mode, occupancy information is relayed by the sensor nodes to one or more addressable interface nodes, so that the detection of occupancy can be sent to a centralised security component of the system, together with the address of the corresponding addressable receiver, thereby indicating an approximate location of an occupant within the office or building. The addressable interface nodes can be distributed as desired; for example, there may be only one such addressable interface node per office or floor, or there may be multiple addressable interface nodes per office or floor. It is not necessary that every one of the addressable interface nodes includes a wireless transmitter.

Additionally, the hybrid security system can use the sensor nodes to control the lights in response to such detection, for example, using the lights as a visual alarm indicator in a strobing fashion by transmitting and relaying a strobe command signal along the wireless peer-to-peer network. It will be apparent to those skilled in the art that the lights could be controlled in many possible different ways in response to the detection of an intruder. For example, detection of an intruder on one floor of a building could cause lights on one or more other floors to flash or otherwise be controlled to indicate intruder detection and approximate location to observers outside the building *(e.g.,* security or police) without alerting the intruder to that detection.

Similarly, if an area is to be evacuated (e.g., due to an event such as a fire alarm, bomb threat, earthquake warning, or the like), the security system can instruct one or more addressable interface nodes to enter an evacuation state. In response, each addressable interface node with a transmitter transmits wireless signals to nearby sensor nodes, instructing them to enter an alarm state. As with the security mode described above, each sensor node relays these messages to other sensor nodes, so that all sensor nodes in the array enter the evacuation state. In addition to forwarding the evacuation messages, each sensor node also responds in accordance with its configuration/programming. For example, sensor nodes located along emergency exit paths can be configured to provide 100% illumination intensity, whereas other lights can be operated at lower power in order to help people find their way to the exits.

### Air Quality Control in a Building Management Systems (BMS)

A core function of a BMS is to control the mixture of heating and cooling to achieve the desired room temperature, and to control the amount of outside air to provide adequate exhausting of the CO₂ emitted by occupants. The most energy efficient way to control this is via CO₂ sensors to provide demand-controlled ventilation. However, installing and connecting all the air quality sensors to a BMS is expensive, and consequently most systems rely on set minimum levels of fresh air, with the consequences that too much energy is consumed if the fresh air levels are set higher than required for the actual occupancy, and insufficient fresh air is provided at times when the maximum number of occupants is present and the most fresh air is required.

As shown in Figure 2, in order to address these shortcomings, CO₂ sensors are included in some or all of the sensor nodes 204, and the CO₂ level information generated by those CO₂ sensors is relayed from sensor node to sensor node until it is received by one or more addressable interface nodes connected to the BMS 205, thereby constituting a hybrid addressable/non-addressable BMS. Thus in Figure 2, a single occupant 206 is present in one region, and the air quality in that regions is sensed by the CO₂ sensor of the nearby sensor node(s) 208, and corresponding signals are sent to the BMS 205 in order to control the nearby air duct(s) 210 to provide a relatively low air flow into that region. In contrast, the regions around a relatively large group of occupants 212 have much higher levels of CO₂, as detected by the CO₂ sensors of the nearby sensor nodes 204, which relay corresponding signals to cause the BMS 205 to provide a relatively high air flow from the nearby ducts 214.

Similarly, smoke detectors can be included in at least some of the sensor nodes, and when a sensor node determines that a fire may be present, a fire alarm signal sent through the network to an addressable interface node in the same manner to trigger a centralised fire alarm.

### Kill-Switch

There are times when occupants forget to switch off some devices on leaving the premises, and the devices can be unintentionally left on until the next morning or longer. Leaving devices on poses several disadvantages, including wasting electricity, and over-heating certain devices that may shorten device life or cause damage, as well as the unnecessary risk of fire when a fault develops in a device or wiring.

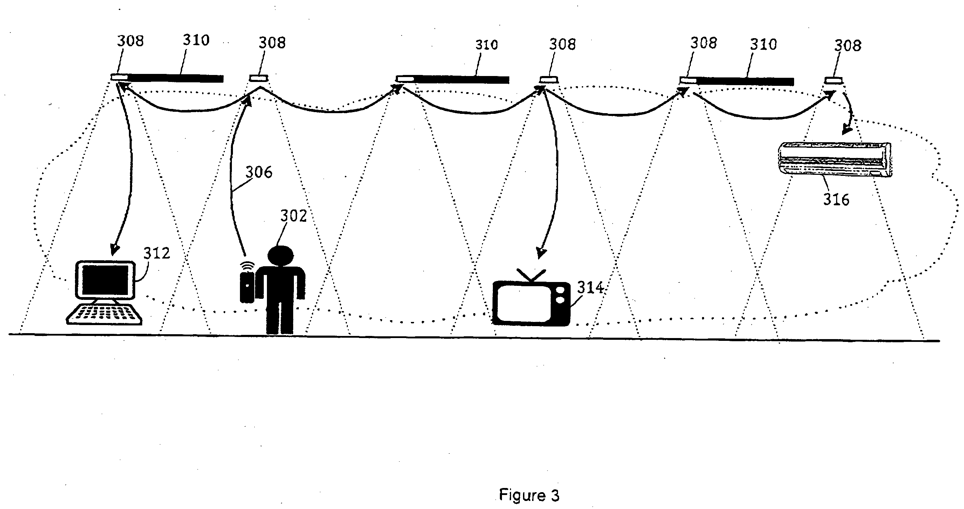

As shown in Figure 3, a Kill-Switch function allows a user 302 to switch off all devices controlled by sensor nodes and/or other nodes of the network by a single press of a wall-plate switch or remote control button 304. The resulting kill or shutdown message is transmitted in the form of wireless signals 306 originating from the remote control to at least one sensor node, and subsequently relayed throughout the sensor node network as described in the p2p configuration patent application. On receiving this command, the controller of each node 308 controls its associated light sources 310 or other devices/system 312, 314, 316 to shut them down or at the least enter a low-power state after a short delay *(e.g.,* 20 seconds), depending on how the node has been configured. Additionally, the sensor nodes can optionally be programmed to ignore or cancel the kill or shutdown message occupancy is detected within a second short period (e.g., 5 seconds) from the end of the delay period in order to provide an opportunity for an undetected occupant to effectively cancel the kill command.

### Internet Gateway/Wall Plate Switch

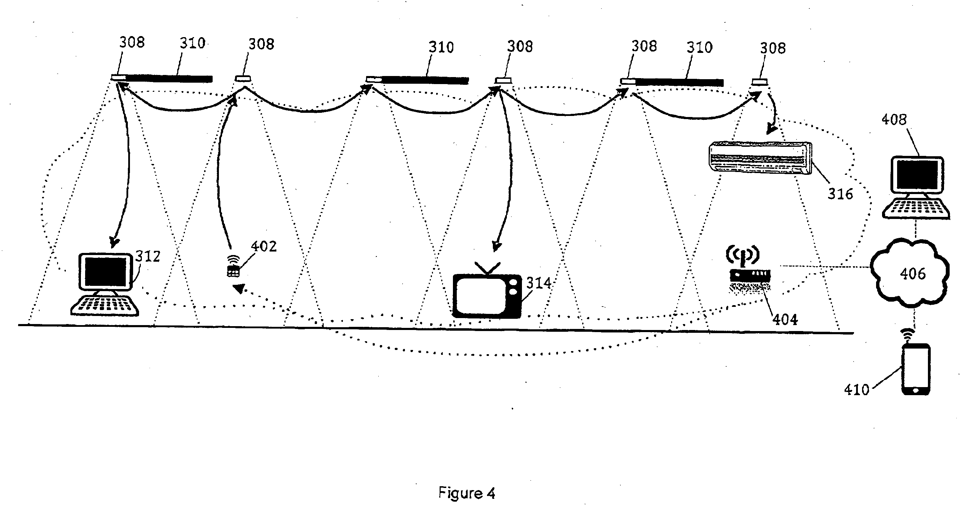

Communication with the wireless peer-to-peer network formed by the sensor nodes and any other nodes of the network can be provided by including either a relatively simple remote control (for one-way communication), or a more complex interface node that can be addressable and/or can support two-way communication. As shown in Figure 4, the interface node can be wall mounted 402 or in the form of a hand-held portable device. It includes a wireless transmitter and optionally also a wireless receiver to support two-way communication, so that the interface node can transmit commands to the sensor node network (and devices/systems connected thereto), and optionally can receive status and other information from the sensor node network.

Commands such as switch-off lights, switch-off air-conditioning, switch-off TVs and switch off everything (as in the case of the kill switch described above) can be programmed into the interface node 402, and these messages transmitted through the peer-to-peer network of sensor nodes to the devices concerned, creating a wireless user interface for lighting, air-conditioning and televisions. This is achieved by configuring each device control node with device data identifying the type of device that the node is controlling. When the node receives a 'switch-off command, the command includes a corresponding identifier of the type of device to be turned off (or alternatively a device type-specific command may be received), it determines whether its associated device is of the corresponding type, and only if it is does the node turn its associated device off (or on, or otherwise controlled in accordance with the corresponding command).

In some cases, it may be desirable to retrieve status, or control devices/systems from a remote location. For example, heating can be switched on before a person arrives at the premises. These functions can be provided by the interface node 402 where the interface node includes a second network interface, typically a wired or wireless IP network interface. For example, as shown in the embodiment of Figure 4, the interface node 402 includes an infrared (IR) wireless interface for communication with the peer-to-peer wireless network and a second (e.g. ,WiFi) interface to a local internet protocol (IP) network having a gateway (typically a modem/router 404) to a wide area communications network (WAN) 406 such as the Internet. This allows commands (including status requests) to be sent by a remote user (via a computer 408 or handheld device 410) to the interface node 402, allowing devices/systems such as the air conditioning system 316 to be controlled remotely.

In one example, an interface node receives messages from a utility provider (or, more generally, the smart grid) to send demand response (or load shedding) messages to force one or more devices (or one or more types of devices) controlled by wireless sensor nodes of the associated peer-to-peer wireless network into a low power state in order to manage peak loads on the electricity grid or a local power system such as a battery bank or diesel generator.

### Lift Control

Lifts and lift shafts consume significant floor space of a building, and their performance, particularly in high rise buildings, has a significant effect on occupant comfort in terms of how quickly a lift can arrive in response to a request from an occupant, Many high end lift control systems keep the lift motors in a state of "stasis" when on standby in order to improve the responsiveness of the lift to a call from an occupant. However, this stasis state consumes a lot of energy as the lift motors and associated control systems are essentially always being powered.

In order to alleviate these difficulties, at least one interface node can be placed in each lift lobby and in communication with other nodes of the peer-to-peer wireless network, thereby enabling detailed occupancy information to be provided to the lift control system, which can result in significant improvements in energy efficiency and lift responsiveness, and may result in fewer lifts being required. The interface node can do more than detect the presence of an occupant in the lift lobby as a standard motion sensor would do: it can effectively 'see' an occupant approaching the lift lobby when the peer-to-peer occupancy messages indicate a decreasing separation of the receiving node from the occupant, indicating that someone is approaching. For example, the interface node may receive messages indicating node separations of, say, 7,6,5,4,3,2, and 1, and then directly detect occupancy itself when an occupant enters the lift lobby. In one implementation, the interface node may therefore call the lift when it receives a 'level 4' message (indicating a separation of 4 node spacings), but cancel the lift request if the further messages are not received within a predetermined time period.

Moreover, standard learning algorithms known to those skilled in the art can be used to optimise the performance of the lifts based on experience, and may be specific to each installation. For example, the received messages representing the progression of decreasing 'levels' (*i.e*., separations) described above would usually culminate in a button press to call the lift. However, some such 'progressions' of messages may not result in a button press. By storing data on each 'event' of message progressions and button presses (or absence of a button press), including the time of day and the delays between received messages (and button presses), detailed statistics can be generated for each specific lift, including the probability of a given message progression to result in a button press. Floors and lift lobbies can even be designed around this capability, in particular to discourage or prevent the lift lobby from being used as a thoroughfare within the same floor, in order to optimise when a lift should be summoned based on the received occupancy data.

Many modifications will be apparent to those skilled in the art without departing from the scope of the present invention.

## Claims

1. A hybrid control system, including:
at least one ad hoc wireless peer-to-peer network of sensor nodes (104) within a building, each of the sensor nodes including:
(a) at least one sensing component configured to generate an output indicative of human presence or absence in a corresponding sensing region;
(b) a wireless receiver to receive from one or more others of the sensor nodes wireless signals representing occupancy data indicative of real-time occupancies of respective locations within the building and respective distances to said locations; and
(c) a wireless transmitter to transmit to one or more others of the sensor nodes wireless signals representing occupancy data indicative of real-time occupancies of respective locations within the building and respective distances to said locations;
and
an interface node (402), including:
(i) a first communications interface to communicate with at least one node of the ad hoc wireless peer-to-peer network of sensor nodes, the first communications interface including a wireless receiver to receive wireless signals representing occupancy data indicative of real-time occupancies of respective locations within the building and respective distances to said locations;
(ii) a second and addressable communications interface to communicate with a common or centrally controlled system configured to control the operation of a plurality of addressable devices and/or systems distributed within a building; and
(iii) a controller configured to send to the common or centrally controlled system, via the second and addressable communications interface, data corresponding to the occupancy data received at the first communications interface to enable the common or centrally controlled system to control the operation of the addressable devices and/or systems distributed within the building on the basis of the real-time occupancies of respective locations within the building and respective distances to said locations.

2. The hybrid control system of claim 1, including a non-lighting device control node, including:
a wireless receiver to receive wireless signals representing occupancy data indicative of real-time occupancies of locations and respective distances to said locations;
a device control interface for outputting a control signal or power to a controlled non-lighting device coupled thereto; and
a controller configured to process said occupancy data to selectively output said control signal or to control the supply of power to said controlled device in order to control the controlled non-lighting device on the basis of said occupancy data.

3. The hybrid control system of claim 2, wherein the controller is configured to process said occupancy data to selectively output said control signal or to control the supply of power to said controlled device in order to control the controlled device on the basis of said occupancy data and respective elapsed times for said occupancies.

4. The system of claim 2 or 3, wherein the controller is configured to control the consumption of power by the controlled component on the basis of said occupancy data.

5. The hybrid control system of any one of claims 1 to 4, wherein the interface node further includes a wireless transmitter to transmit wireless signals to at least one node of the ad hoc wireless peer-to-peer network on the basis of data received from the common or centrally controlled system via the corresponding communications interface.

6. The hybrid control system of any one of claims 1 to 5, further including a thermostat; wherein the controller is configured to cause at least one of the second and addressable interface and the wireless transmitter to transmit signals indicative of outputs of the thermostat, and wherein the second and addressable communications interface is coupled to an air conditioning system to enable local control of air conditioning on the basis of temperature and occupancy.

7. The hybrid control system of any one of claims 1 to 6, wherein the nodes of the ad hoc wireless peer-to-peer network include one or more smoke detectors, and the second and addressable communications interface is coupled to a fire alarm system to be triggered on the basis of wireless signals received by the interface node and representing smoke detection.

8. The hybrid control system of any one of claims 1 to 7, wherein the ad hoc wireless peer-to-peer network includes sensor nodes configured to control respective light sources, and the controller of the interface node is configured to be responsive to receipt of a trigger signal received from the common or centrally controlled system to cause the wireless transmitter to transmit wireless signals to at least one of the sensor nodes to cause the sensor nodes to control their respective light sources in a corresponding manner.

9. The hybrid control system of claim 8, wherein the trigger signal represents an alarm signal, and the sensor nodes control their respective light sources to indicate

10. The hybrid control system of claim 8 or 9, wherein the sensor nodes control their respective light sources to selectively illuminate one or more exit paths to guide occupants to corresponding exits.

11. The hybrid control system of any one of claims 1 to 10, wherein the ad hoc wireless peer-to-peer network includes sensor nodes configured to generate said occupancy data, and the controller of the interface node is configured to be responsive to receipt of a mode change signal received from the common or centrally controlled system to cause the wireless transmitter to transmit wireless signals to at least one of the sensor nodes to cause the sensor nodes to enter a corresponding operating mode.

12. The hybrid control system of claim 11, wherein the operating mode includes a security mode wherein the sensor nodes forward occupancy data to the interface node so that the presence of an intruder can be detected and forwarded to the common or centrally controlled system.

13. An hybrid control system as claimed in any one of claims 1 to 12, wherein the nodes of the ad hoc wireless peer-to-peer network include at least one of an air quality sensor, a smoke detector, and a thermostat, and the controller is configured to cause the wireless transmitter to transmit wireless signals indicative of outputs of the air quality sensor, smoke detector, and/or thermostat.

14. A hybrid control method of a hybrid control system having:
a first communications interface to communicate with at least one node of an ad hoc wireless peer-to-peer network of sensor nodes (104) within the building, the first communications interface including a wireless receiver for receiving wireless signals representing occupancy data indicative of real-time occupancies of respective locations within the building and respective distances to said locations;
a second and addressable communications interface for communications with a common or centrally controlled system configured to control the operation of a plurality of addressable devices and/or systems distributed within a building;
wherein the hybrid control method includes the steps of:
receiving, at the first communications interface of the interface node (402), wireless signals representing occupancy data indicative of real-time occupancies of respective locations within the building and respective distances to said locations; and
sending, from the second and addressable communications interface of the interface node to the common or centrally controlled system, data corresponding to the received occupancy data to enable the common or centrally controlled system to control the operation of the addressable devices and/or systems distributed within the building on the basis of the real-time occupancies of respective locations within the building and respective distances to said locations.

15. The hybrid control method of claim 14, wherein the hybrid control system includes a device control node having:
a wireless receiver configured to receive wireless signals representing occupancy data indicative of real-time occupancies of respective locations and respective distances to said locations;
a device control interface configured for outputting a control signal or power to a controlled device coupled thereto; and
a controller configured to process said occupancy data to selectively output said control signal or to control the supply of power to said controlled device in order to control the controlled device on the basis of said occupancy data; wherein the hybrid control method includes the steps of:
receiving, at said interface node, wireless signals representing a device control command and a device identifier;
determining whether the device identifier corresponds to the device coupled to the device control node; and
only if the device identifier corresponds to the device coupled to the device control node, controlling the device coupled to the device control node in accordance with the device control command;
wherein the device identifier optionally identifies a type of said device and uniquely identifies said device;
wherein said controlling of the device optionally includes powering off the device or placing the device in a low power state; and
wherein the hybrid control process optionally includes forwarding the device control command and device identifier via a wireless transmitter of the device control node to allow other device control nodes to control their associated devices.

## Patentansprüche

1. Hybridsteuersystem, das Folgendes einschließt:
wenigstens ein drahtloses Ad-hoc-Peer-to-Peer-Netz von Sensorknoten (104) innerhalb eines Gebäudes, wobei jeder der Sensorknoten Folgendes einschließt:
(a) wenigstens eine Erfassungskomponente, die konfiguriert ist, um eine Ausgabe zu erzeugen, die eine Anwesenheit oder eine Abwesenheit von Menschen in einem entsprechenden Erfassungsbereich anzeigt;
(b) einen drahtlosen Empfänger, um von einem oder mehreren anderen der Sensorknoten drahtlose Signale zu empfangen, die Belegungsdaten darstellen, die Echtzeitbelegungen von jeweiligen Orten innerhalb des Gebäudes und jeweilige Abstände zu den Orten anzeigen; und
(c) eine drahtlose Übertragungseinrichtung, um drahtlose Signale an einen oder mehrere andere der Sensorknoten zu übertragen, die Belegungsdaten darstellen, die Echtzeitbelegungen von jeweiligen Orten innerhalb des Gebäudes und jeweilige Abstände zu den Orten anzeigen; und
einen Schnittstellenknoten (402), der Folgendes einschließt:
(i) eine erste Kommunikationsschnittstelle, um mit wenigstens einem Knoten des drahtlosen Ad-hoc-Peer-to-Peer-Netzes von Sensorknoten zu kommunizieren, wobei die erste Kommunikationsschnittstelle einen drahtlosen Empfänger einschließt, um drahtlose Signale zu empfangen, die Belegungsdaten darstellen, die Echtzeitbelegungen von jeweiligen Orten innerhalb des Gebäudes und jeweilige Abstände zu den Orten anzeigen;
(ii) eine zweite und adressierbare Kommunikationsschnittstelle, um mit einem gemeinsamen oder zentral gesteuerten System zu kommunizieren, das konfiguriert ist, um den Betrieb mehrerer adressierbarer Vorrichtungen und/oder Systeme zu steuern, die innerhalb eines Gebäudes verteilt sind; und
(iii) eine Steuerung, die konfiguriert ist, um über die zweite und adressierbare Kommunikationsschnittstelle Daten, die den an der ersten Kommunikationsschnittstelle empfangenen Belegungsdaten entsprechen, an das gemeinsame oder zentral gesteuerte System zu senden, um das gemeinsame oder zentral gesteuerte System zu aktivieren, um den Betrieb der adressierbaren Vorrichtungen und/oder Systeme, die innerhalb des Gebäudes verteilt sind, auf der Basis der Echtzeitbelegungen der jeweiligen Orte innerhalb des Gebäudes und der jeweiligen Abstände zu den Orten zu steuern.

2. Hybridsteuersystem nach Anspruch 1, das einen Nicht-Beleuchtungs-Vorrichtungssteuerknoten einschließt, der Folgendes einschließt:
einen drahtlosen Empfänger, um drahtlose Signale zu empfangen, die Belegungsdaten darstellen, die Echtzeitbelegungen von Orten und jeweilige Abstände zu den Orten anzeigen;
eine Vorrichtungssteuerschnittstelle zum Ausgeben eines Steuersignals oder einer Leistung an eine daran gekoppelte gesteuerte Nicht-Beleuchtungs-Vorrichtung; und
eine Steuerung, die konfiguriert ist, um die Belegungsdaten zu verarbeiten, um das Steuersignal wahlweise auszugeben oder um die Versorgung von Leistung der gesteuerten Vorrichtung zu steuern, um die gesteuerte Nicht-Beleuchtungs-Vorrichtung auf der Basis der Belegungsdaten zu steuern.

3. Hybridsteuersystem nach Anspruch 2, wobei die Steuerung konfiguriert ist, um die Belegungsdaten zu verarbeiten, um das Steuersignal wahlweise auszugeben oder um die Versorgung von Leistung der gesteuerten Vorrichtung zu steuern, um die gesteuerte Vorrichtung auf der Basis der Belegungsdaten und jeweiliger verstrichener Zeiten für die Belegungen zu steuern.

4. System nach Anspruch 2 oder 3, wobei die Steuerung konfiguriert ist, um den Verbrauch von Leistung durch die gesteuerte Komponente auf der Basis der Belegungsdaten zu steuern.

5. Hybridsteuersystem nach einem der Ansprüche 1 bis 4, wobei der Schnittstellenknoten ferner eine drahtlose Übertragungseinrichtung einschließt, um drahtlose Signale an wenigstens einen Knoten des drahtlosen Ad-hoc-Peer-to-Peer-Netzes auf der Basis von Daten zu übertragen, die von dem gemeinsamen oder zentral gesteuerten System über die entsprechende Kommunikationsschnittstelle empfangen werden.

6. Hybridsteuersystem nach einem der Ansprüche 1 bis 5, das ferner ein Thermostat einschließt; wobei die Steuerung konfiguriert ist, um die zweite und adressierbare Schnittstelle und/oder die drahtlose Übertragungseinrichtung zu veranlassen, Signale zu übertragen, die Ausgaben des Thermostats anzeigen, und wobei die zweite und adressierbare Kommunikationsschnittstelle mit einer Klimaanlage gekoppelt ist, um eine lokale Steuerung von Klimatisierung auf der Basis von Temperatur und Belegung zu aktivieren.

7. Hybridsteuersystem nach einem der Ansprüche 1 bis 6, wobei die Knoten des drahtlosen Ad-hoc-Peer-to-Peer-Netzes einen oder mehrere Rauchmelder einschließen und die zweite und adressierbare Kommunikationsschnittstelle mit einem Feueralarmsystem gekoppelt ist, um auf der Basis von drahtlosen Signalen ausgelöst zu werden, die durch den Schnittstellenknoten empfangen werden und eine Raucherkennung darstellen.

8. Hybridsteuersystem nach einem der Ansprüche 1 bis 7, wobei das drahtlose Ad-hoc-Peer-to-Peer-Netz Sensorknoten einschließt, die konfiguriert sind, um jeweilige Lichtquellen zu steuern, und die Steuerung des Schnittstellenknotens konfiguriert ist, um auf einen Empfang eines Auslösesignals zu reagieren, das von dem gemeinsamen oder zentral gesteuerten System empfangen wird, um die drahtlose Übertragungseinrichtung zu veranlassen, drahtlose Signale an wenigstens einen der Sensorknoten zu übertragen, um die Sensorknoten zu veranlassen, ihre jeweiligen Lichtquellen auf eine entsprechende Weise zu steuern.

9. Hybridsteuersystem nach Anspruch 8, wobei das Auslösesignal ein Alarmsignal darstellt und die Sensorknoten ihre jeweiligen Lichtquellen steuern, um Bewohnern den Alarm anzuzeigen.

10. Hybridsteuersystem nach Anspruch 8 oder 9, wobei die Sensorknoten ihre jeweiligen Lichtquellen steuern, um einen oder mehrere Ausgangswege wahlweise zu beleuchten, um Bewohnern zu entsprechenden Ausgängen zu führen.

11. Hybridsteuersystem nach einem der Ansprüche 1 bis 10, wobei das drahtlose Ad-hoc-Peer-to-Peer-Netz Sensorknoten einschließt, die konfiguriert sind, um die Belegungsdaten zu erzeugen, und die Steuerung des Schnittstellenknotens konfiguriert ist, um auf den Empfang eines Modusänderungssignals zu reagieren, das von dem gemeinsamen oder zentral gesteuerten System empfangen wird, um die drahtlose Übertragungseinrichtung zu veranlassen, drahtlose Signale an wenigstens einen der Sensorknoten zu übertragen um die Sensorknoten zu veranlassen, in einen entsprechenden Betriebsmodus einzutreten.

12. Hybridsteuersystem nach Anspruch 11, wobei der Betriebsmodus einen Sicherheitsmodus einschließt, wobei die Sensorknoten Belegungsdaten an den Schnittstellenknoten weiterleiten, so dass die Anwesenheit eines Eindringlings erkannt und an das gemeinsame oder zentral gesteuerte System weitergeleitet werden kann.

13. Hybridsteuersystem nach einem der Ansprüche 1 bis 12, wobei die Knoten des drahtlosen Ad-hoc-Peer-to-Peer-Netzes einen Luftqualitätssensor, einen Rauchmelder und/oder ein Thermostat einschließen und die Steuerung konfiguriert ist, um die drahtlose Übertragungseinrichtung zu veranlassen, drahtlose Signale zu übertragen, die Ausgaben des Luftqualitätssensors, des Rauchmelders und/oder des Thermostats anzeigen.

14. Hybridsteuerverfahren eines Hybridsteuersystems, das Folgendes aufweist:
eine erste Kommunikationsschnittstelle, um mit wenigstens einem Knoten eines drahtlosen Ad-hoc-Peer-to-Peer-Netzes von Sensorknoten (104) innerhalb des Gebäudes zu kommunizieren, wobei die erste Kommunikationsschnittstelle einen drahtlosen Empfänger zum Empfangen von drahtlosen Signalen einschließt, die Belegungsdaten darstellen, die Echtzeitbelegungen von jeweiligen Orten innerhalb des Gebäudes und jeweilige Abstände zu den Orten anzeigen;
eine zweite und adressierbare Kommunikationsschnittstelle für Kommunikationen mit einem gemeinsamen oder zentral gesteuerten System, das konfiguriert ist, um den Betrieb mehrerer adressierbarer Vorrichtungen und/oder Systeme zu steuern, die innerhalb eines Gebäudes verteilt sind;
wobei das Hybridsteuerverfahren die folgenden Schritte einschließt:
Empfangen, an der ersten Kommunikationsschnittstelle des Schnittstellenknotens (402), von drahtlosen Signalen, die Belegungsdaten darstellen, die Echtzeitbelegungen von jeweiligen Orten innerhalb des Gebäudes und jeweilige Abstände zu den Orten anzeigen; und
Senden, von der zweiten und adressierbaren Kommunikationsschnittstelle des Schnittstellenknotens an das gemeinsame oder zentral gesteuerte System, von Daten, die den empfangenen Belegungsdaten entsprechen, um das gemeinsame oder zentral gesteuerte System zu aktivieren, um den Betrieb der adressierbaren Vorrichtungen und/oder Systeme, die innerhalb des Gebäudes verteilt sind, auf der Basis der Echtzeitbelegungen von jeweiligen Orten innerhalb des Gebäudes und jeweiligen Abständen zu den Orten zu steuern.

15. Hybridsteuerverfahren nach Anspruch 14, wobei das Hybridsteuersystem einen Vorrichtungssteuerknoten einschließt, der Folgendes aufweist:
einen drahtlosen Empfänger, der konfiguriert ist, um drahtlose Signale zu empfangen, die Belegungsdaten darstellen, die Echtzeitbelegungen von jeweiligen Orten und jeweilige Abstände zu den Orten anzeigen;
eine Vorrichtungssteuerschnittstelle, die zum Ausgeben eines Steuersignal oder einer Leistung an eine daran gekoppelte gesteuerte Vorrichtung konfiguriert ist; und
eine Steuerung, die konfiguriert ist, um die Belegungsdaten zu verarbeiten, um das Steuersignal wahlweise auszugeben oder um die Versorgung von Leistung der gesteuerten Vorrichtung zu steuern, um die gesteuerte Vorrichtung auf der Basis der Belegungsdaten zu steuern;
wobei das Hybridsteuerverfahren die folgenden Schritte einschließt:
Empfangen, an dem Schnittstellenknoten, von drahtlosen Signalen, die einen Vorrichtungssteuerbefehl und einen Vorrichtungsbezeichner darstellen;
Bestimmen, ob der Vorrichtungsbezeichner der mit dem Vorrichtungssteuerknoten gekoppelten Vorrichtung entspricht; und
nur falls der Vorrichtungsbezeichner der mit dem Vorrichtungssteuerknoten gekoppelten Vorrichtung entspricht, Steuern der mit dem Vorrichtungssteuerknoten gekoppelten Vorrichtung gemäß dem Vorrichtungssteuerbefehl;
wobei der Vorrichtungsbezeichner optional eine Art der Vorrichtung identifiziert und die Vorrichtung eindeutig identifiziert;
wobei das Steuern der Vorrichtung optional ein Ausschalten der Vorrichtung oder ein Versetzen der Vorrichtung in einen Niedrigleistungszustand einschließt; und
wobei der Hybridsteuervorgang optional das Weiterleiten des Vorrichtungssteuerbefehls und des Vorrichtungsbezeichners über eine drahtlose Übertragungseinrichtung des Vorrichtungssteuerknotens einschließt, um anderen Vorrichtungssteuerknoten zu ermöglichen, ihre zugehörigen Vorrichtungen zu steuern.

## Revendications

1. Système de contrôle hybride, comportant :
au moins un réseau de pairs sans fil ad hoc de nœuds de capteur (104) à l'intérieur d'un bâtiment, chacun des nœuds de capteur comportant :
(a) au moins un composant de détection configuré pour générer une sortie indiquant la présence ou l'absence humaine dans une région de détection correspondante ;
(b) un récepteur sans fil pour recevoir, depuis un ou plusieurs autres des nœuds de capteur, des signaux sans fil représentant des données d'occupation indiquant des occupations en temps réel d'emplacements respectifs à l'intérieur du bâtiment et des distances respectives auxdits emplacements ; et
(c) un transmetteur sans fil pour transmettre à un ou plusieurs autres des nœuds de capteur des signaux sans fil représentant des données d'occupation indiquant des occupations en temps réel d'emplacements respectifs à l'intérieur du bâtiment et des distances respectives auxdits emplacements ;
et
un nœud d'interface (402), comportant :
(i) une première interface de communication pour communiquer avec au moins un nœud du réseau de pairs sans fil ad hoc de nœuds de capteur, la première interface de communication comportant un récepteur sans fil pour recevoir des signaux sans fil représentant des données d'occupation indiquant des occupations en temps réel d'emplacements respectifs à l'intérieur du bâtiment et des distances respectives auxdits emplacements ;
(ii) une seconde interface de communication adressable pour communiquer avec un système commun ou à contrôle central configuré pour contrôler le fonctionnement d'une pluralité de dispositifs et/ou de systèmes adressables distribués à l'intérieur d'un bâtiment ; et
(iii) un contrôleur configuré pour envoyer au système commun ou à contrôle central, par l'intermédiaire de la seconde interface de communication adressable, des données correspondant aux données d'occupation reçues au niveau de la première interface de communication pour permettre au système commun ou à contrôle central de contrôler le fonctionnement des dispositifs et/ou des systèmes adressables distribués à l'intérieur du bâtiment sur la base des occupations en temps réel d'emplacements respectifs à l'intérieur du bâtiment et des distances respectives auxdits emplacements.

2. Système de contrôle hybride selon la revendication 1, comportant un nœud de contrôle de dispositif non destiné à l'éclairage, comportant :
un récepteur sans fil pour recevoir des signaux sans fil représentant des données d'occupation indiquant des occupations en temps réel d'emplacements et des distances respectives auxdits emplacements ;
une interface de contrôle de dispositif permettant de délivrer un signal de contrôle ou de l'énergie à un dispositif non destiné à l'éclairage contrôlé couplé à celle-ci ; et
un contrôleur configuré pour traiter lesdites données d'occupation pour délivrer sélectivement ledit signal de contrôle ou pour contrôler l'alimentation en énergie audit dispositif contrôlé afin de contrôler le dispositif non destiné à l'éclairage contrôlé sur la base desdites données d'occupation.

3. Système de contrôle hybride selon la revendication 2, dans lequel le contrôleur est configuré pour traiter lesdites données d'occupation pour délivrer sélectivement ledit signal de contrôle ou pour contrôler l'alimentation en énergie audit dispositif contrôlé afin de contrôler le dispositif contrôlé sur la base desdites données d'occupation et des temps écoulés respectifs pour lesdites occupations.

4. Système selon la revendication 2 ou 3, dans lequel le contrôleur est configuré pour contrôler la consommation d'énergie par le composant contrôlé sur la base desdites données d'occupation.

5. Système de contrôle hybride selon l'une quelconque des revendications 1 à 4, dans lequel le nœud d'interface comporte en outre un transmetteur sans fil pour transmettre des signaux sans fil à au moins un nœud du réseau de pairs sans fil ad hoc sur la base de données reçues depuis le système commun ou à contrôle central par l'intermédiaire de l'interface de communication correspondante.

6. Système de contrôle hybride selon l'une quelconque des revendications 1 à 5, comportant en outre un thermostat ; dans lequel le contrôleur est configuré pour amener la seconde interface adressable et/ou le transmetteur sans fil à transmettre des signaux indiquant des sorties du thermostat, et dans lequel la seconde interface de communication adressable est couplée à un système de climatisation pour permettre un contrôle local de la climatisation sur la base de la température et de l'occupation.

7. Système de contrôle hybride selon l'une quelconque des revendications 1 à 6, dans lequel les nœuds du réseau de pairs sans fil ad hoc comportent un ou plusieurs détecteurs de fumée, et la seconde interface de communication adressable est couplée à un système d'alarme incendie à déclencher sur la base de signaux sans fil reçus par le nœud d'interface et représentant une détection de fumée.

8. Système de contrôle hybride selon l'une quelconque des revendications 1 à 7, dans lequel le réseau de pairs sans fil ad hoc comporte des nœuds de capteur configurés pour contrôler des sources de lumière respectives, et le contrôleur du nœud d'interface est configuré pour répondre à la réception d'un signal de déclenchement reçu depuis le système commun ou à contrôle central pour amener le transmetteur sans fil à transmettre des signaux sans fil à au moins l'un des nœuds de capteur pour amener les nœuds de capteur à contrôler leurs sources de lumière respectives d'une manière correspondante.

9. Système de contrôle hybride selon la revendication 8, dans lequel le signal de déclenchement représente un signal d'alarme, et les nœuds de capteur contrôlent leurs sources de lumière respectives pour indiquer ladite alarme aux occupants.

10. Système de contrôle hybride selon la revendication 8 ou 9, dans lequel les nœuds de capteur contrôlent leurs sources de lumière respectives pour illuminer sélectivement un ou plusieurs trajets de sortie pour guider les occupants vers des sorties correspondantes.

11. Système de contrôle hybride selon l'une quelconque des revendications 1 à 10, dans lequel le réseau de pairs sans fil ad hoc comporte des nœuds de capteur configurés pour générer lesdites données d'occupation, et le contrôleur du nœud d'interface est configuré pour répondre à la réception d'un signal de changement de mode reçu depuis le système commun ou à contrôle central pour amener le transmetteur sans fil à transmettre des signaux sans fil à au moins l'un des nœuds de capteur pour amener les nœuds de capteur à entrer dans un mode de fonctionnement correspondant.

12. Système de contrôle hybride selon la revendication 11, dans lequel le mode de fonctionnement comporte un mode de sécurité dans lequel les nœuds de capteur acheminent des données d'occupation au nœud d'interface de sorte que la présence d'un intrus peut être détectée et acheminée au système commun ou à contrôle central.

13. Système de contrôle hybride selon l'une quelconque des revendications 1 à 12, dans lequel les nœuds du réseau de pairs sans fil ad hoc comportent un capteur de qualité de l'air, et/ou un détecteur de fumée et/ou un thermostat, et le contrôleur est configuré pour amener le transmetteur sans fil à transmettre des signaux sans fil indiquant des sorties du capteur de qualité de l'air, du détecteur de fumée et/ou du thermostat.

14. Procédé de contrôle hybride d'un système de contrôle hybride ayant :
une première interface de communication pour communiquer avec au moins un nœud d'un réseau de pairs sans fil ad hoc de nœuds de capteur (104) à l'intérieur du bâtiment, la première interface de communication comportant un récepteur sans fil pour recevoir des signaux sans fil représentant des données d'occupation indiquant des occupations en temps réel d'emplacements respectifs à l'intérieur du bâtiment et des distances respectives auxdits emplacements ;
une seconde interface de communication adressable pour des communications avec un système commun ou à contrôle central configurée pour contrôler le fonctionnement d'une pluralité de dispositifs et/ou de systèmes adressables distribués à l'intérieur d'un bâtiment ;
dans lequel le procédé de contrôle hybride comporte les étapes consistant à :
recevoir, au niveau de la première interface de communication du nœud d'interface (402), des signaux sans fil représentant des données d'occupation indiquant des occupations en temps réel d'emplacements respectifs à l'intérieur du bâtiment et des distances respectives auxdits emplacements ; et
envoyer, depuis la seconde interface de communication adressable du nœud d'interface au système commun ou à contrôle central, des données correspondant aux données d'occupation reçues pour permettre au système commun ou à contrôle central de contrôler le fonctionnement des dispositifs et/ou des systèmes adressables distribués à l'intérieur du bâtiment sur la base des occupations en temps réel d'emplacements respectifs à l'intérieur du bâtiment et de distances respectives auxdits emplacements.

15. Procédé de contrôle hybride selon la revendication 14, dans lequel le système de contrôle hybride comporte un nœud de contrôle de dispositif ayant :
un récepteur sans fil configuré pour recevoir des signaux sans fil représentant des données d'occupation indiquant des occupations en temps réel d'emplacements respectifs et des distances respectives auxdits emplacements ;
une interface de contrôle de dispositif configurée pour délivrer un signal de contrôle ou de l'énergie à un dispositif contrôlé couplé à celle-ci ; et
un contrôleur configuré pour traiter lesdites données d'occupation pour délivrer sélectivement ledit signal de contrôle ou pour contrôler l'alimentation en énergie audit dispositif contrôlé afin de contrôler le dispositif contrôlé sur la base desdites données d'occupation ; dans lequel le procédé de contrôle hybride comporte les étapes consistant à :
recevoir, au niveau dudit nœud d'interface, des signaux sans fil représentant une commande de contrôle de dispositif et un identifiant de dispositif ;
déterminer si l'identifiant de dispositif correspond au dispositif couplé au nœud de contrôle de dispositif ; et
seulement si l'identifiant de dispositif correspond au dispositif couplé au nœud de contrôle de dispositif, contrôler le dispositif couplé au nœud de contrôle de dispositif conformément à la commande de contrôle de dispositif ;
dans lequel l'identifiant de dispositif identifie éventuellement un type dudit dispositif et identifie uniquement ledit dispositif ;
dans lequel ledit contrôle du dispositif comporte éventuellement la mise hors tension du dispositif ou le fait de placer le dispositif dans un état de basse énergie ; et
dans lequel le processus de contrôle hybride comporte éventuellement l'acheminement de la commande de contrôle de dispositif et de l'identifiant de dispositif par l'intermédiaire d'un transmetteur sans fil du nœud de contrôle de dispositif pour permettre à d'autres nœuds de contrôle de dispositif de contrôler leurs dispositifs associés.
